# EUROPÄISCHE PATENTSCHRIFT

(11) **EP 0 481 348 B1**
(45) Veröffentlichungstag und Bekanntmachung des Hinweises auf die Patenterteilung: **14.06.1995**
(21) Anmeldenummer: 91117241.9
(22) Anmeldetag: 09.10.1991
(51) Int. Cl.: B23H 5/04, B24B 53/00

(54) **Verfahren und Vorrichtung zum Abrichten von Schleifscheiben**
Method and apparatus for dressing grinding discs
Méthode et appareil de taillage de disques de meulage

(30) Priorität: 18.10.1990 DE 4033137
(43) Veröffentlichungstag der Anmeldung: 22.04.1992
(73) Patentinhaber: WENDT GmbH, D-40670 Meerbusch (DE)
(72) Erfinder: Packalin, Juri Alekseevich, 440045 Penza (SU)
(74) Vertreter: Strehl Schübel-Hopf Groening & Partner

(56) Entgegenhaltungen:
- US-A- 4 937 416
- SOVIET ENGINEERING RESEARCH, Band 7, Nr. 1, 1987, MELTON MOWBRAY, GB, Seiten69-71; Y.A. PAKHALIN et al.: "Contact erosion dressing of diamond wheels with aface-type working surface"
- SOVIET ENGINEERING RESEARCH, Band 7, Nr. 12, Dezember 1987, MELTON MOWBRAY, GB,Seiten 56-57; SH.A. BAKHTIAROV: "Improvement of contact erosion dressing ofdiamond wheels with an end working surface"

## Beschreibung

Die Erfindung betrifft ein Verfahren und eine Vorrichtung zum Abrichten von Schleifscheiben mit elektrisch leitender Bindung, wobei das Abrichtwerkzeug und die Schleifscheibe mechanisch in Kontakt gebracht werden und wobei an das Abrichtwerkzeug eine Spannung angelegt wird. Ein solches Verfahren und eine entsprechende Vorrichtung sind aus der US-A-4 937 416 bekannt.

Dem Abrichten von Schleifscheiben kommt in mehrfacher Beziehung große Bedeutung zu. Es dient insbesondere dem Aufrechterhalten und Wiederherstellen der Griffigkeit der Schleifscheiben und der Aufrechterhaltung oder Wiederherstellung der Geometrie des Schleifbelages. Die Bedeutung des Abrichtens ist um so höher, je härter die in den Schleifkörpern verwendeten Schleifkörnungen sind und je härter der mit ihnen zu bearbeitende Werkstoff ist.

Zu diesem Zweck werden zahlreiche Verfahren eingesetzt, von denen vor allem abrasive und elektroerosive Verfahren praktische Bedeutung gewonnen haben.

Bei den abrasiven Verfahren tritt jedoch der Nachteil eines großen Verschleißes des Abrichtwerkzeuges und eines geringen Aufschlusses der Schleifkörner aus der Bindung auf, wodurch kein ausreichender Zwischenraum zwischen den Körnern für die Aufnahme des Spanes beim Schleifen geschaffen wird. Dies wiederum führt beim Gebrauch zu einem schnellen Zusetzen der Schleifscheibe, einer großen Reibung zwischen Bindungsmaterial und Werkstück sowie folglich zu großen erforderlichen Schneidkräften und hoher Schneidtemperatur.

Das in der Regel verwendete elektroerosive Abrichtverfahren ist die Funkenerosion. Dabei werden von Impulsgeneratoren Spannungsimpulse zwischen einer Elektrode und der abzurichtenden Schleifscheibe erzeugt, die Funkenentladungen und damit eine lokale Entfernung der Metallbindung der Schleifscheibe hervorrufen. Die Nachteile dieses Verfahrens bestehen darin, daß ein aufwendiger Impulsgenerator erforderlich ist, ein passender Arbeitsspalt zwischen Elektrode und Schleifscheibe nur schwierig aufrechtzuerhalten ist und nur eine geringe Abrichtleistung erreicht wird. Außerdem ist es notwendig, zur Übertragung der elektrischen Leistung einen Kollektor an der Schleifspindel vorzusehen, welche die Schleifscheibe trägt. Die dazu erforderlichen Isolierungen sind jedoch bei Präzisionsmaschinen immer problematisch, weil man mit der Isolierung Steifigkeit verliert. Selbst bei der besten Isolierung treten dabei immer wieder vagabundierende Ströme auf, die wegen ihres ausgeprägten Impulscharakters die üblicherweise verwendeten elektronischen Steuerungen empfindlich stören können.

Aus der DE 29 17 910 C2 ist es bekannt, ein Werkzeug, wie eine Schleifscheibe, dadurch von Spänen zu befreien und die Schleifkörner aufzuschließen, daß parallel zur Bearbeitung eines Werkstückes eine Abrichtelektrode gegen die Schleifscheibe gedrückt wird, wobei zwischen Abrichtelektrode und Schleifscheibe die gleiche Impulsspannung angelegt wird wie zwischen Werkstück und Schleifscheibe. Auch bei diesem bekannten Verfahren sind somit ein Impulsgenerator und ein Kollektor an der Schleifspindel erforderlich.

Aus der DE 3 835 166 A1 ist eine mehrteilige Elektrode zum Abrichten von Schleifscheiben mit elektrisch leitender Bindung bekannt, die es ermöglicht, den Abrichtvorgang so einzustellen, daß die Abrichtintensität an jedem Punkt der Scheibenoberfläche optimal ist. Das beschriebene Prinzip ist sowohl auf elektroerosive als auch auf elektrochemische Abrichtverfahren anwendbar. Die beiden Teile der Elektrode sind Teil von getrennten Stromkreisen, die getrennt angesteuert werden.

Aus "Soviet Engineering Research", Band 7, Nr. 1, Seiten 69-71 und Nr. 12, Seiten 56 und 57 ist es bekannt, bei einem der DE 29 17 910 entsprechenden Verfahren auch das Abrichtwerkzeug einer Rotation zu unterwerfen.

Bei dem aus der eingangs genannten US-A-4 937 416 bekannten Verfahren bzw. der entsprechenden Vorrichtung sind für eine Schleifscheibe zwei Abrichtwerkzeuge bzw. Elektroden vorgesehen, die am Umfang der Schleifscheibe anliegen. Die beiden Elektroden bestehen aus Platten mit vorgegebenen Dimensionen, die in einem Abstand angeordnet sind und von einer isolierten Halterung in Richtung Schleifscheibe vorstehen. Die beiden Platten sind an die beiden Pole einer Stromversorgung angeschlossen, so daß von der Halterung der Schleifscheibe kein Strom abgenommen zu werden braucht.

Aufgabe der Erfindung ist es, ausgehend von dem eingangs genannten Stand der Technik ein Verfahren und eine Vorrichtung zum Abrichten von Schleifscheiben zu schaffen, das bzw. die einfach und in der Leistung effektiv sind.

Diese Aufgabe wird durch die Merkmale der unabhangigen Ansprüche 1 und 8 gelöst.

Das Abrichtwerkzeug umfaßt somit sowohl die Anode als auch die Kathode, und der angelegte Strom fließt lediglich durch die leitende Bindung der Schleifscheibe von dem den einen Teil des Abrichtwerkzeuges bildenden Elektrodenabschnitt zu dem anderen, diesem gegenüber isolierten Elektrodenabschnitt des Abrichtwerkzeugs. An der Schleifspindel ist daher kein Kollektor o. dergl. erforderlich, so daß alle damit verbundenen Isolationsprobleme beseitigt sind. Durch galvanische Trennung der Spannungsquelle von dem Potential der Maschine kann darüberhinaus der Stromfluß durch die Spindel und andere empfindliche Teile sicher vermieden werden.
Weitere vorteilhafte Ausgestaltungen des erfindungsgemäßen Verfahrens bzw. der Vorrichtung sind in den Unteransprüchen beschrieben.

Im Betrieb entsteht durch die gegenseitige Bewegung des Abrichtwerkzeuges und der Schleifscheibe eine periodische Aufeinanderfolge von elektrischen Kontakten und Kontaktunterbrechungen. Im Moment des Kontaktes über hervorstehende Belagteile zerstört der durchfließende elektrische Strom durch Widerstandserwärmung und zusätzlich beim Abreißen des Kontaktes durch Funken diese Belagteile. Diese Phase hoher Bearbeitungsintensität ist durch Fließen hoher Ströme charakterisiert. Nach dem Abtragen der überstehenden Belagteile nehmen die hervorstehenden Schleifkörner der Schleifscheibe kleine Späne von der Oberfläche des Abrichtwerkzeuges ab. Diese Späne stellen einen elektrischen Kurzschluß zwischen der metallischen Bindung der Schleifscheibe und dem Abrichtwerkzeug her. Der über die Späne fließende Strom erodiert die Bindung, so daß die Schleifkörner gut freigelegt werden. Dabei sind relativ wenig Funken, jedoch sehr gut die glühenden Späne zu sehen, die aus der Kontaktzone gerissen werden. Der Arbeitsstrom sinkt bei dieser Freilegung der Schleifkörner zunehmend ab. Es findet somit aufgrund der Charakteristik der physikalischen Vorgänge eine selbsttätige Regelung der Abrichtintensität gerade in der Weise statt, wie es für das Schärfen von Schleifscheiben vorteilhaft ist.

Dem erfindungsgemäßen, kontakterosiven Abrichtverfahren liegt somit die mechanische Generierung elektrischer Entladungen in der Schneidzone mit den einander abwechselnden Zuständen des gleitenden Kontaktes und des Spanelektrodenschlusses zugrunde. Die einzelnen Zustände werden nicht durch einen Impulsgenerator, sondern durch den mechanischen Kontakt der Elektroden mit der Schleifscheibe und der Relativbewegung dazwischen hergestellt.

In praktischen Versuchen konnte der große Wert des erfindungsgemäßen Verfahrens insbesondere bei der Bearbeitung von PKD-Werkzeugen mit Diamantschleifscheiben nachgewiesen werden. Das kontinuierlich durchgeführte, kontakterosive Abrichten führt zu einer wesentlichen Reduzierung der Schleifzeit durch höhere Griffigkeit der abgerichteten Schleifscheiben, einer deutlichen Verminderung der Schartigkeit der geschliffenen Werkstücke durch die Verringerung des Schleifdrucks und zu einer wesentlich erhöhten Standzeit der Schleifscheibe durch geringere Beanspruchung im Schleifvorgang.

Ausführungsbeispiele des Verfahrens bzw. der Vorrichtung gemäß der Erfindung werden nachfolgend anhand einer schematischen Zeichnung näher erläutert. Es zeigen:
- Fig. 1: ein Beispiel einer Vorrichtung zum Abrichten von Schleifscheiben;
- Fig. 2a: eine Ausführungsform der Vorrichtung gemäss der Erfindung;
- Fig. 2b: eine Aufsicht auf das Abrichtwerkzeug der zweiten Ausführungsform; und die
- Fig. 3, 4 und 5: die Vorgänge an der Oberfläche der Schleifscheibe beim Abrichten bzw. deren fertige Oberfläche.

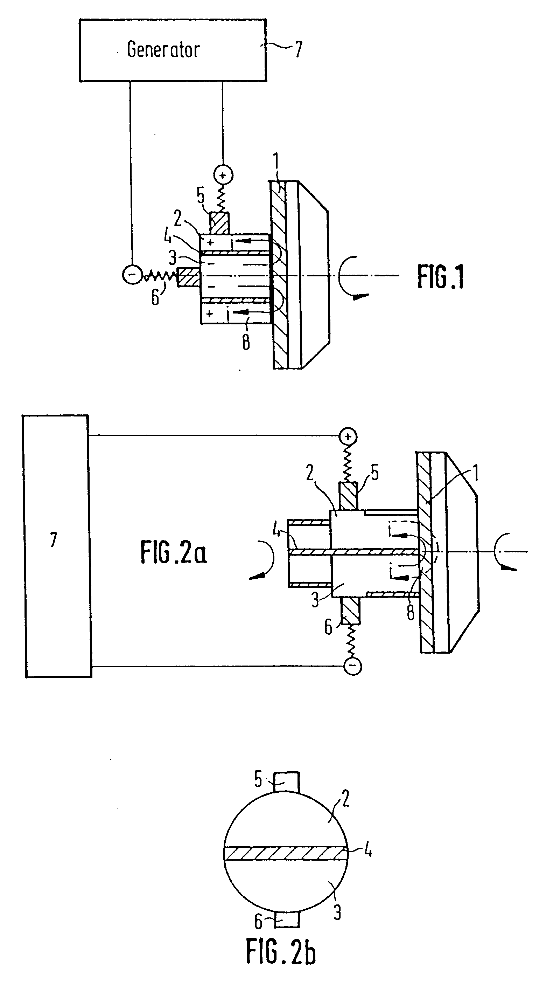

In Fig. 1 ist ein Beispiel einer Vorrichtung zum Abrichten von Schleifscheiben dargestellt. Die Vorrichtung umfaßt eine Diamantscheibe 1, ein Paar Elektrodenabschnitte 2 und 3 eines Abrichtwerkzeuges, eine Isolierung 4 zwischen den Elektrodenabschnitten 2, 3, Bürsten 5 und 6 zur Zuführung eines elektrischen Stromes an die Elektrodenabschnitte 2, 3 und einen Generator 7. Ferner ist die Fließrichtung des elektrischen Stromes beim Abrichten mit dem Bezugszeichen 8 gekennzeichnet. Die Elektrodenabschnitte 2, 3 bestehen vorzugsweise aus Kupfer oder Wolframkupfer. Sie können gegebenenfalls aber auch aus Messing, Bronze, Aluminium, Eisen oder Stahl hergestellt sein. Dem Elektrodenmaterial kann zur Erhöhung der Verschleißfestigkeit ein abrasives Material zugesetzt sein. Das Abrichten erfolgt unter Einsatz einer wäßrigen oder öligen Kühlschmiermittellösung. Im Prinzip ist jedoch jede Schleifflüssigkeit geeignet.

Bei dem in Fig. 1 gezeigten Beispiel bestehen die Elektrodenabschnitte des Abrichtwerkzeuges aus einem rohrförmigen, äußeren Elektrodenabschnitt 2 und einem massiven, zylinderförmigen, inneren Elektrodenabschnitt 3, der vom äußeren Elektrodenabschnitt 2 koaxial umgeben und von diesem durch eine zylindrische Isolierung 4 getrennt ist. Mittels der Bürsten 5 und 6 wird ein Strom mit einer Spannung von etwa 10 bis 40 V und einer Stromstärke von 15 A (flächenabhängig bis 60 A) durch den inneren Elektrodenabschnitt 3 über die Diamantscheibe 1 und den äußeren Elekrodenabschnitt 2 geführt, so daß der Stromkreis von den Elektrodenabschnitten über die elektrisch leitende Bindung des diamantbesetzten Belages der Schleifscheibe in der Fließrichtung 8 geschlossen ist. Das heißt, es fließt kein Strom über die Halterung der Diamantscheibe, weil das zweigeteilte Abrichtwerkzeug beide Pole des Stromkreises enthält.

In den Fig. 2a und 2b ist eine Seitenansicht einer erfindungsgemässen Ausführungsform der Vorrichtung zum Abrichten von Schleifscheiben bzw. eine Vorderansicht des dafür vorgesehenen Abrichtwerkzeuges gezeigt. Das Abrichtwerkzeug besteht aus einem Rotationskörper (Zylinder), der entlang seiner Achse in zwei Hälften geschnitten ist, die gegeneinander isoliert sind und so die beiden Abricht-Elektrodenabschnitte 2 und 3 bilden. Diesen Elektrodenabschnitten wird über die Bürsten 5 und 6 der Strom aus dem Generator 7 so zugeführt, daß er durch den einen Elektrodenabschnitt 3 in die Diamantscheibe 1 und von dieser in den anderen Elektrodenabschnitt 2 zurückfließt. Eine Drehung des Abrichtwerkzeuges ruft durch die kommutatorähnliche Anordnung der beiden Elektrodenabschnitte 2 und 3 und der Bürsten 5 und 6 einen periodischen Wechsel der Polarität der angelegten Spannung hervor, der ein gleichmäßigeres Abrichten ermöglicht.

Beim Abrichtvorgang werden die das Abrichtwerkzeug bildenden Elektrodenabschnitte 2 und 3 mit dem Belag der Diamantscheibe 1 in mechanischen Kontakt gebracht, wobei sich zwischen den Elektrodenabschnitten 2, 3 und der Schleifscheibe 1 ein Schmiermittelfilm befindet. Die Schleifscheibe 1 und das Abrichtwerkzeug werden in Drehung versetzt, es wird eine Spannung an das Abrichtwerkzeug angelegt und eine Zustellung des Abrichtwerkzeuges in Richtung der Diamantscheibe bewirkt. Die Zustellung kann mit konstanter Kraft von 1 N/cm² bis 100 N/cm², konstanter Geschwindigkeit oder derart erfolgen, daß der fließende Arbeitsstrom konstant ist. Der angelegte Strom braucht im übrigen nicht besonders geglättet zu sein. Es kann im Gegenteil auch Wechselstrom verwendet werden.

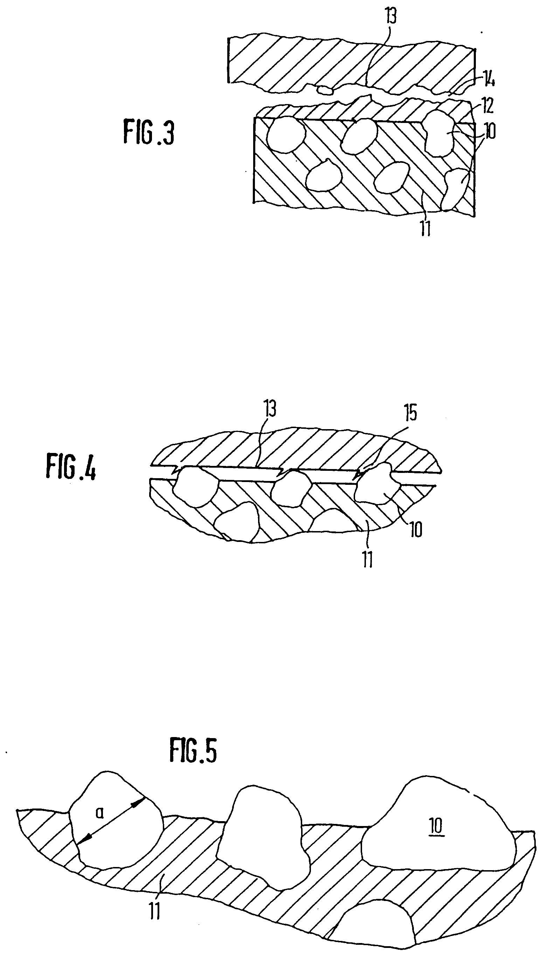

Anhand der Fig. 3 bis 5 werden die beim Abrichten einer Schleifscheibe mit der beschriebenen Vorrichtung auftretenden Vorgänge näher erläutert. Wie Fig. 3 zeigt, ragen bei einer abgenutzten Schleifscheibe deren Diamantkörner 10 nicht über die Bindung 11 bzw. die Ablagerungen 12 hinaus, und die Oberfläche 13 des Abrichtwerkzeuges gleitet über die zugesetzten Bereiche der Schleifscheibe. Der über Oberflächen-Punktkontakte 14 vom Abrichtwerkzeug zur Schleifscheibe bzw. umgekehrt fließende Strom zerstört die Ablagerungen 12, so daß die Diamantkörner 10 etwas freigelegt werden.

Für diesen Zustand ist ein hoher Arbeitsstrom charakteristisch. Je mehr die Diamantkörner freigelegt werden, desto mehr sinkt auch der Strom. In der Folge werden von den teilweise freigelegten Diamantkörnern 10 in der Schleifscheibe von der Oberfläche 13 des Abrichtwerkzeuges Späne 15 abgetrennt, wie Fig. 4 zeigt. Der über die Späne 15 laufende Strom zerstört an den den Spänen gegenüberliegenden Stellen die metallische Bindung 11 der Schleifscheibe, wodurch die Diamantkörner 10 noch mehr freigelegt werden. Damit kein Lichtbogen entsteht, muß der Generator eine fallende Strom-Spannungs-Charakteristik besitzen.

Mit dem beschriebenen Verfahren und der Vorrichtung zur Durchführung desselben wird ein guter Aufschluß der Diamantkörner 10 in der Bindung 11 erhalten. Nach dem Entfernen der schwach gebundenen Körner beträgt die Öffnungshöhe etwa die Hälfte der Kornabmessung, wie Fig. 5 zeigt. Dadurch wird viel Platz für die bei der Schleifarbeit entstehenden Späne geschaffen. Die große Öffnungshöhe verringert die Wahrscheinlichkeit eines Kontaktes der Bindung mit dem abzuschleifenden Werkstoff, die erforderlichen Schneidkräfte nehmen um den Faktor 2 bis 3 ab und die Schneidtemperatur sinkt auf die Hälfte. Die Standzeit der Diamantscheibe ist 2 bis 5 mal größer als bei abrasiven Abrichtmethoden. Der Verschleiß des Abrichtwerkzeuges ist sehr gering. Die Arbeitsweise des beschriebenen Abrichtverfahrens eignet sich insbesondere auch für das kontinuierliche Schärfen der Schleifscheibe während der Schleifbearbeitung eines Werkstücks. Hierbei wirkt sich der abhängig von der Schärfe des Schleifbelages selbsttätig einstellende Arbeitsstrom positiv aus. Außerdem wird das Bearbeitungsergebnis nicht durch eventuell in den Arbeitsprozess gelangende Körner eines abrasiven Abrichtwerkzeuges verschlechtert. Der über die beiden Elektroden geführte Spannungskreis kann ein Gleichspannungskreis oder auch ein Wechselspannungskreis sein.

### Bezugszeichenliste

- 1: Diamantscheibe
- 2,3: Elektroden des Abrichtwerkzeuges
- 4: Isolierung
- 5,6: Bürsten
- 7: Generator
- 8: Fließrichtung des Stromes
- 10: Diamantkörner
- 11: metallische Bindung
- 12: Ablagerungen
- 13: Oberfläche des Abrichtwerkzeuges
- 14: Oberflächen - Punktkontakte
- 15: Späne

## Patentansprüche

1. Verfahren zum elektroerosiven Abrichten von Schleifscheiben (1) mit elektrisch leitender Bindung (11), wobei das Abrichtwerkzeug und die Schleifscheibe mechanisch in Kontakt gebracht werden und wobei an das Abrichtwerkzeug eine Gleichspannung angelegt wird, wobei ferner das Abrichtwerkzeug eine in sich zweigeteilte Elektrode ist, deren beide Elektrodenabschnitte (2, 3) durch eine Isolierung (4) voneinander getrennt sind, wobei über die beiden Abschnitte (2, 3) der Elektrode ein Spannungskreis geführt wird, dadurch gekennzeichnet, dass die Elektrode rotiert und die beiden Abschnitte (2, 3) der Elektrode eine unterschiedliche Polarität aufweisen, die periodisch wechselt.

2. Verfahren nach Anspruch 1, dadurch gekennzeichnet, daß die angelegte Spannung zwischen 1 und 100 V liegt.

3. Verfahren nach Anspruch 1, dadurch gekennzeichnet, daß die Drehzahl des Abrichtwerkzeuges zwischen 1 und 1000 U/min beträgt.

4. Verfahren nach Anspruch 1, dadurch gekennzeichnet, daß das Abrichtwerkzeug mit konstanter Kraft von 1 bis 100 N/cm² an die Schleifscheibe (1) angedrückt wird.

5. Verfahren nach Anspruch 1, dadurch gekennzeichnet, daß zwischen Abrichtwerkzeug und Schleifscheibe (1) eine vorgegebene feste Relativbewegung stattfindet.

6. Verfahren nach Anspruch 5, dadurch gekennzeichnet, daß die Relativbewegung von der Höhe des fließenden Stromes, dem Schleifgeräusch und/oder dem Schleifdruck abhängig ist.

7. Verfahren nach einem der Ansprüche 1 bis 6, dadurch gekennzeichnet, daß beim Abrichten der Schleifscheibe (1) eine Kühlmittellösung eingesetzt wird.

8. Vorrichtung zur Durchführung des Verfahrens nach einem der Ansprüche 1 bis 7, mit einem Abrichtwerkzeug und einer Schleifscheibe (1) mit elektrisch leitender Bindung (11), wobei das Abrichtwerkzeug und die Schleifscheibe mechanisch in Kontakt stehen und wobei am Abrichtwerkzeug eine Gleichspannung anliegt, wobei ferner das Abrichtwerkzeug eine in sich zweigeteilte Elektrode ist, deren beide Elektrodenabschnitte (2, 3) durch eine Isolierung (4) voneinander getrennt sind, wobei über die beiden Abschnitte (2, 3) der Elektrode ein Spannungskreis geführt ist, dadurch gekennzeichnet, dass die Elektrode drehbar angeordnet ist und die beiden Abschnitte (2, 3) der Elektrode unterschiedliche Polarität aufweisen, die periodisch wechselt.

9. Vorrichtung nach Anspruch 8, dadurch gekennzeichnet, daß das zweigeteilte Abrichtwerkzeug aus einem zylindrischen Rotationskörper besteht, der entlang seiner Drehachse in zwei Hälften geschnitten ist, die mittels der Isolierung (4) gegeneinander isoliert sind und die die beiden Elektrodenabschnitte (2, 3) bilden.

10. Vorrichtung nach einem der Ansprüche 8, 9, dadurch gekennzeichnet, daß die gleitenden Teile des Abrichtwerkzeuges aus Kupfer, Wolframkupfer, Messing, Bronze, Eisen oder Aluminium bestehen.

11. Vorrichtung nach einem der Ansprüche 8 bis 10, dadurch gekennzeichnet, daß die gleitenden Teile des Abrichtwerkzeuges aus Metallen unter Zusatz von abrasiven Materialien bestehen.

## Claims

1. Method of electro-erosively dressing grinding discs (1) with electrically conductive bonding (11), whereby the dressing tool and the grinding disc are brought into mechanical contact and whereby a D.C. voltage is applied to the dressing tool, whereby further the dressing tool is a two-part electrode whose two electrode sections (2,3) are separated from one another by insulation (4), whereby there is a voltage circuit over the two sections (2,3) of the electrode, characterised in that the electrode rotates and the two sections (2,3) of the electrode have a different polarity which periodically changes.

2. Method as claimed in claim 1, characterised in that the applied voltage is between 1 and 100 V.

3. Method as claimed in claim 1, characterised in that the speed of rotation of the dressing tool is between 1 and 1000 rpm.

4. Method as claimed in claim 1, characterised in that the dressing tool is pressed against the grinding disc (1) with a constant force of 1 to 1000 N/cm².

5. Method as claimed in claim 1, characterised in that a predetermined fixed relative movement occurs between the dressing tool and grinding disc (1).

6. Method as claimed in claim 5, characterised in that the relative movement is dependent on the magnitude of the current flowing, the grinding noise and/or the grinding pressure.

7. Method as claimed in one of claims 1 to 6, characterised in that a cooling medium solution is used when dressing the grinding disc (1).

8. Apparatus for carrying out the method as claimed in one of claims 1 to 7 with a dressing tool and a grinding disc (1) with electrically conductive bonding (11), whereby the dressing tool and the grinding disc are in mechanical contact and whereby a D.C. voltage is applied to the dressing tool, whereby further the dressing tool is a two-part electrode whose two electrode sections (2,3) are separated from one another by insulation (4), whereby there is a voltage circuit over the two sections (2,3) of the electrode, characterised in that the electrode is rotatably arranged and the two sections (2,3) of the electrode have different polarity which periodically changes.

9. Apparatus as claimed in claim 8, characterised in that the two-part dressing tool comprises a cylindrical rotary body which is cut along its axis of rotation into two halves which are insulated from one another by means of the insulation (4) and which constitute the two electrode sections (2,3).

10. Apparatus as claimed in one of claims 8,9, characterised in that the sliding portions of the dressing tool comprise copper, tungsten copper, brass, bronze, iron or aluminium.

11. Apparatus as claimed in one of claims 8 to 10, characterised in that the sliding portions of the dressing tool comprise metals with the addition of abrasive materials.

## Revendications

1. Procédé pour le dressage par électroérosion de meules discoïdes (1) à liant conducteur électrique (11), selon lequel on amène l'outil de dressage et la meule mécaniquement en contact et on applique une tension continue à l'outil de dressage, selon lequel, en outre, l'outil de dressage est une électrode divisée en elle-même en deux parties ou sections (2, 3) séparées l'une de l'autre par une isolation (4), un circuit de tension étant amené à passer par les deux sections (2, 3) de l'électrode, caractérisé en ce que l'électrode tourne et les deux sections (2, 3) de l'électrode présentent des polarités différentes qui alternent périodiquement.

2. Procédé selon la revendication 1, caractérisé en ce que la tension appliquée est comprise entre 1 et 100 V.

3. Procédé selon la revendication 1, caractérisé en ce que la vitesse de rotation de l'outil de dressage est comprise entre 1 et 1000 tr/min.

4. Procédé selon la revendication 1, caractérisé en ce que l'outil de dressage est pressé contre la meule (1) sous une force constante allant de 1 à 100 N/cm².

5. Procédé selon la revendication 1, caractérisé en ce qu'un mouvement relatif fixe, prédéterminé, s'effectue entre l'outil de dressage et la meule (1).

6. Procédé selon la revendication 5, caractérisé en ce que le mouvement relatif dépend de l'intensité du courant électrique, du bruit de dressage et/ou de la pression de dressage.

7. Procédé selon une des revendications 1 à 6, caractérisé en ce que l'on utilise une solution d'agent de refroidissement lors du dressage de la meule (1).

8. Appareil pour la mise en oeuvre du procédé selon une des revendications 1 à 7, comprenant un outil de dressage et une meule discoïde (1) à liant conducteur électrique (11), appareil dans lequel l'outil de dressage et la meule sont mécaniquement en contact et une tension continue est appliquée à l'outil de dressage, dans lequel, en outre, l'outil de dressage est une électrode divisée en elle-même en deux parties ou sections (2, 3) séparées l'une de l'autre par une isolation (4), un circuit de tension passant par les deux sections (2, 3) de l'électrode, caractérisé en ce que l'électrode est disposée rotative et les deux sections (2, 3) de l'électrode présentent des polarités différentes qui alternent périodiquement.

9. Appareil selon la revendication 8, caractérisé en ce que l'outil de dressage, divisé en deux parties, consiste en un corps cylindrique de révolution coupé le long de son axe de rotation en deux moitiés qui sont mutuellement isolées au moyen de l'isolation (4) et constituent les deux sections d'électrode (2, 3).

10. Appareil selon la revendication 8 ou 9, caractérisé en ce que les parties glissantes de l'outil de dressage sont en cuivre, tungstène-cuivre, laiton, bronze, fer ou aluminium.

11. Appareil selon une des revendications 8 à 10, caractérisé en ce que les parties glissantes de l'outil de dressage sont constituées de métaux auxquels sont ajoutés des matériaux abrasifs.
